# EUROPEAN PATENT SPECIFICATION

(11) **EP 2 708 628 B1**
(45) Date of publication and mention of the grant of the patent: **02.09.2015**
(21) Application number: 13183591.0
(22) Date of filing: 09.09.2013
(51) Int. Cl.: D06F 37/24

(54) **Washing machine**
Waschmaschine
Machine à laver

(30) Priority: 12.09.2012 JP 2012200758; 10.04.2013 KR 20130039412
(43) Date of publication of application: 19.03.2014
(73) Proprietor: Samsung Electronics Co., Ltd, Gyeonggi-do 443-742 (KR)
(72) Inventor: Ohyagi, Atsushi, Osakabu (JP)
(74) Representative: Walaski, Jan Filip

(56) References cited:
- EP-A1- 2 154 285
- EP-A2- 0 811 717
- US-A1- 2007 225 143

## Description

The present invention relates to a balancer and a washing machine, particularly to a vertical type full automatic washing machine that successively performs washing, rinsing, and spin-drying processes, known for instance, from EP-A-0 811 717.

In this kind of full automatic washing machine, which is also referred to as a top loading washing machine, a water tub, in which a washing tub rotating about a vertical axis is mounted, is suspended in a housing. Laundry is introduced into the washing tub, and a series of processes from washing to spin-drying are successively performed under automatic control. The washing tub rotates at high speed during spin-drying.

If laundry accumulates at one side of the washing tub during spin-drying, the washing tub and the water tub are greatly vibrated. As a result, durability of the washing machine is lowered and noise is generated from the washing machine. For this reason, an annular balancer is generally mounted in the washing tub to suppress vibration. An annular space (race) is defined in the balancer. A liquid or solid balance adjustment member is enclosed in the race. When laundry accumulates at one side of the washing tub, the balance adjustment member adjusts weight balance between the laundry and the washing tub.

Meanwhile, the balancer effectively exhibits a balance adjustment function after the rotational frequency of the washing tub exceeds a predetermined rotational frequency (also referred to as a resonance rotational frequency) at which the washing tub primarily resonates. Consequently, the balancer does not function in a low rotational frequency region in which the rotational frequency of the washing tub is lower than the resonance rotational frequency.

When the rotational frequency of the washing tub exceeds the resonance rotational frequency, the washing tub is vibrated, and therefore, the water tub is greatly whirled. An example of the balancer includes a ball balancer using balls, such as steel balls, as the balancer adjustment member. The ball balancer effectively exhibits a balance adjustment function after the rotational frequency of the washing tub exceeds the resonance rotational frequency. However, when the rotational frequency of the washing tub exceeds the resonance rotational frequency, whirling of the water tub may be negatively affected.

That is, if the balls are not uniformly positioned when the rotational frequency of the washing tub exceeds the resonance rotational frequency, the balls cause unbalance. As a result, whirling of the water tub becomes larger or smaller, and therefore, the whirling of the water tub is nonuniform (nonuniform whirling).

For example, even when laundry does not excessively accumulate at one side of the washing tub, whirling of the water tub may become larger depending upon the state of the ball balancer. In this case, the washing machine may be abnormally stopped, and it may be necessary to resume a spin-drying process.

On the other hand, whirling of the water tub may become smaller even when one-side accumulation of laundry is large. In this case, excessive vibration may be caused after a spin-drying rotational frequency is increased. For example, if the balls are positioned in the race in the direction opposite to excessive one-side accumulation of the laundry when the rotational frequency of the washing tub exceeds the resonance rotational frequency, whirling of the water tub becomes smaller with the result that it may not be possible to detect excessive one-side accumulation of the laundry and thus to stop the spin-drying. In addition, excessive vibration may be generated after the rotational frequency of the washing tub is increased.

A washing machine designed to solve the above problems of the ball balancer is disclosed in Japanese Patent Application Publication No. H10-52591.

According to this publication, balls are uniformly arranged at the initial stage of spin-drying. Specifically, an annular receiving chamber having a plurality of balls received therein is provided at the bottom surface thereof with three depressions, in which the balls are uniformly received, at equal intervals.

The balls received in the depressions escape from the depressions when the rotational frequency of a washing tub reaches a predetermined rotational frequency. After escaping from the depressions, the balls freely move in the receiving chamber. The balls are naturally received in the depressions by vibration generated during decelerated rotation of the washing tub.

In addition, a ball balancer having a plurality of resistance plates provided in an annular chamber, in which a plurality of spheres (balls) is received, is disclosed in Japanese Patent Application Publication No. S58-209518. According to this publication, the resistance plates protrude from the outer circumferential side wall of the annular chamber toward the center of the annular chamber. A moving channel, through which the spheres pass, is formed at the upper part of each resistance plate. Movement of the spheres is prevented by the resistance plates until the rotational frequency of a washing tub exceeds a resonance rotational frequency. The outer circumferential side wall of the annular chamber is inclined. When the rotational frequency of the washing tub exceeds the resonance rotational frequency, the spheres move upward along the outer circumferential side wall of the annular chamber and are located in the moving channels. As a result, the spheres may freely move in the circumferential direction.

In the washing machine disclosed in Japanese Patent Application Publication No. H10-52591, the increase in whirling of the water tub may be stably suppressed as long as all of the balls are received in the depressions before a spin-drying process is performed. For the ball balancer, however, it may be necessary to suppress movement of the balls to some extent in order to prevent self-excited vibration. To this end, a viscous fluid exhibiting high viscosity is received in the receiving chamber together with the balls. The movement of the balls is suppressed by the viscous fluid. Consequently, it takes much time to receive the balls in the depression using vibration generated during decelerated rotation of the washing tub as in the washing machine disclosed in Japanese Patent Application Publication No. H10-52591. Also, it may be difficult to stably receive all of the balls in the depressions.

In addition, the viscous fluid performs rhythmic movement during rotation. Such rhythmic movement of the viscous fluid increases vibration or noise of the washing tub.

EP-A-0811717 discloses a washing machine having a balancing device.

It is an aspect of the present disclosure to provide a washing machine having a simple structure, wherein balls are stably uniformly arranged in a ball balancer when a spin-drying process is performed, and rhythmic movement of a viscous fluid is suppressed. Additional aspects of the disclosure will be set forth in part in the description which follows and, in part, will be apparent from the description, or may be learned by practice of the disclosure.

According to the invention, there is provided a ball balancer according to claim 1 and a washing machine according to claim 6.

In accordance with one aspect of the present disclosure, a washing machine includes a housing, a water tub suspended in the housing, a washing tub disposed in the water tub to rotate about a vertical axis, and an annular ball balancer in the washing tub about the vertical axis. The ball balancer may include a plurality of balls, a viscous fluid, a balancer case having an annular ring space defined therein, the ring space being partitioned into a bottom surface, top surface, inner circumferential surface, and outer circumferential surface, and a plurality of division plates to partition the ring space into a plurality of arc-shaped divided spaces. The viscous fluid and at least one of the balls may be received in each divided space. Each divided space may be provided at a portion thereof corresponding to the bottom surface with an inclined surface downwardly inclined from one end of each division plate to a deepest part in a circumferential direction. The deepest part of each divided space may be located at a position where weight balance of the balls is achieved in a stop state.

In the washing machine with the above-stated construction, the annular ring space, provided in the ball balancer, is partitioned into the plurality of arc-shaped divided spaces by the division plates. The viscous fluid and the balls are received in each divided space. Each divided space is provided at the portion thereof corresponding to the bottom surface with the inclined surface inclined to the deepest part located at the position where weight balance of the balls is achieved in the stop state.

In the stop state, the balls received in the respective divided spaces are guided along the inclined surfaces and gather in the respective deepest parts. As long as the washing machine is in the stop state to some extent before a spin-drying process is commenced, therefore, weight balance of the ball balancer is achieved. As a result, it may be possible to stably suppress nonuniform whirling of the water tub occurring when the rotational frequency of the washing tub exceeds a resonance rotational frequency.

In addition, the ring space is partitioned by the division plates. Consequently, rhythmic movement of the viscous fluid is effectively suppressed, and vibration and noise of the washing tub are further suppressed.

For example, a gap smaller than each ball may be defined between each division plate and the outer circumferential surface.

It may be necessary for the viscous fluid to be uniformly contained in the respective divided spaces such that total weight of the viscous fluid is balanced in the same manner as the balls. In a case in which the gap is provided as described above, a predetermined amount of viscous fluid may be uniformly contained in the respective divided spaces while regulating the balls, thereby improving productivity.

During high-speed rotation, the viscous fluid is moved outward in the radial direction by centrifugal force. As a result, the liquid surface of the viscous fluid is positioned adjacent to the inner circumferential surface in a state in which the liquid surface of the viscous fluid is almost vertical. Since the gap is provided between each division plate and the outer circumferential surface, however, the movement of the viscous fluid is reduced, thereby effectively suppressing rhythmic movement of the viscous fluid.

For example, the outer circumferential surface may be provided with an inclined surface to guide the balls to the top surface such that the balls are separated from the bottom surface during high-speed rotation.

In a stop state or in a low-speed rotation state, the balls remain in contact with the bottom surface. Consequently, the balls gather in the deepest parts by the inclined surface of the bottom surface, and therefore, it may be possible to suppress nonuniform whirling of the water tub occurring when the rotational frequency of the washing tub exceeds the resonance rotational frequency.

In a high-speed rotation state, the balls are separated from the bottom surface by centrifugal force and the inclined surface of the outer circumferential surface. As a result, the balls may freely move in the circumferential direction. Consequently, a balance adjustment function of the ball balancer is effectively exhibited.

The number of the divided spaces may be 3.

In this case, high vibration suppression efficiency may be achieved.
In addition, the deepest part may be located at a middle portion of each divided space in the circumferential direction.

In this case, the circumferential length of the inclined surface of the bottom surface is decreased. Consequently, it may be possible to relatively increase the inclined surface, whereby the balls stably gather in the deepest part.

These and/or other aspects of the disclosure will become apparent and more readily appreciated from the following description of the embodiments, taken in conjunction with the accompanying drawings of which:
FIG. 1 is a schematic perspective view showing a washing machine according to an embodiment of the present disclosure;
FIG. 2 is a schematic vertical sectional view taken along line X-X of FIG. 1;
FIG. 3 is a schematic perspective view showing a ball balancer;
FIG. 4 is a schematic perspective view showing the internal structure of the ball balancer;
FIG. 5 is a schematic sectional perspective view showing the internal structure of the ball balancer;
FIG. 6A is a schematic sectional view showing the ball balancer in a stop state and FIG. 6B is a schematic sectional view showing the ball balancer in a rotation state;
FIG. 7A is a schematic plan view illustrating motion of a viscous fluid and FIG. 7B is a schematic vertical sectional view taken along line Y-Y of FIG. 7A;
FIG. 8 is a graph showing a relationship between the division number of a ring space and vibration suppression efficiency of a washing tub;
FIG. 9 is a graph showing a relationship between the number of unbalanced balls and a whirling range of a water tub;
FIG. 10A is a graph showing time-based change of a vibration waveform of the washing tub in a case in which division plates are provided and FIG. 10B is a graph showing time-based change of a vibration waveform of the washing tub in a case in which no division plates are provided;
FIG. 11 is a schematic view showing a modification of the washing machine;
FIG. 12 is a schematic view showing another modification of the washing machine;
FIG. 13 is a schematic view showing another modification of the washing machine; and
FIG. 14 is a schematic view showing a further modification of the washing machine.

Reference will now be made in detail to the embodiments of the present disclosure, examples of which are illustrated in the accompanying drawings, wherein like reference numerals refer to like elements throughout.

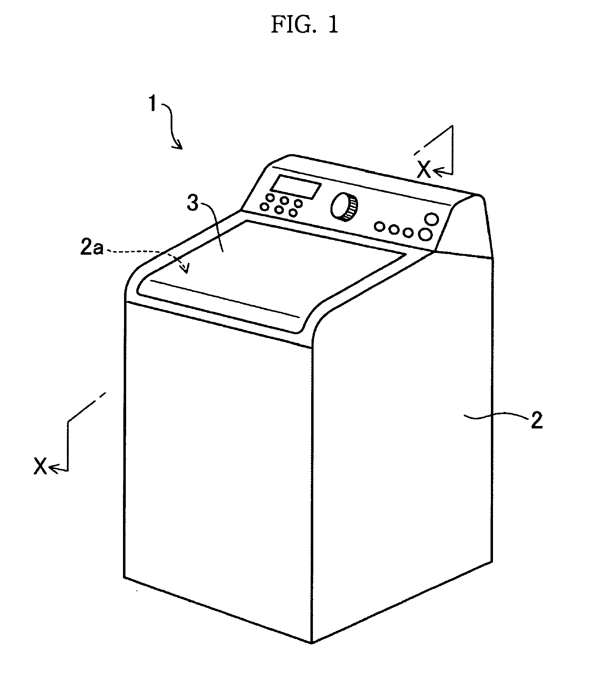

FIG. 1 shows a full automatic washing machine 1 according to an embodiment of the present disclosure. The washing machine 1 includes a rectangular box type housing 2. At the upper part of the housing 2 is formed an introduction port 2a, which is open upward and is covered by a lid 3 which may be hingedly opened and closed. Laundry is introduced into and removed from the washing machine 1 through the introduction port 2a.

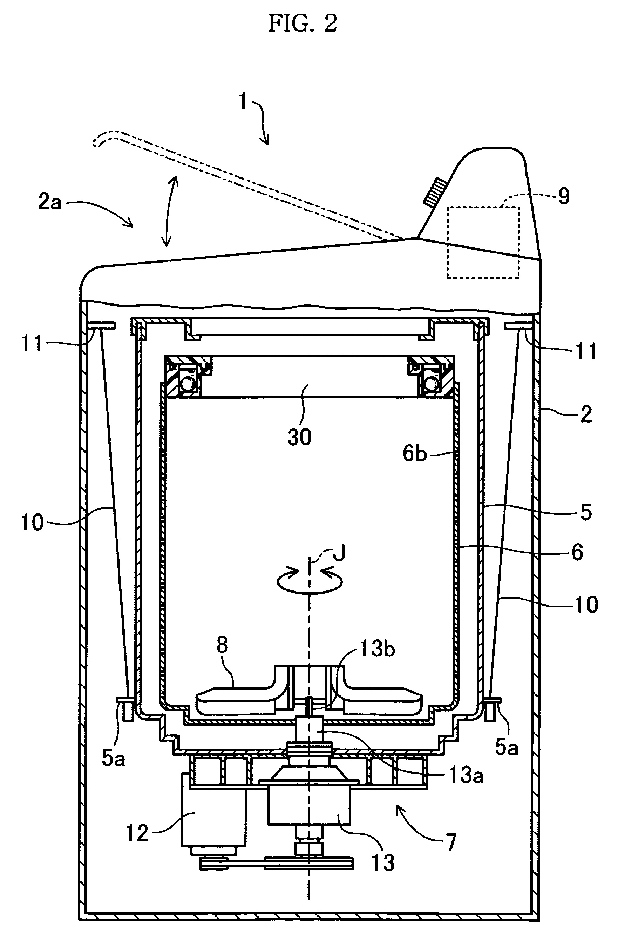

Various switches and a display unit are provided at the housing 1 at the rear of the introduction port 2a. In the washing machine 1, the switches may be manipulated to automatically perform washing, rinsing, and spin-drying processes in succession. As shown in FIG. 2, a water tub 5, a washing tub 6, a drive unit 7, a pulsator 8, and a ball balancer 30 are mounted in the housing 2. Reference numeral 9 indicates a controller to control the drive unit 7 in each process.

The water tub 5 is a cylindrical container having a bottom. The water tub 5 is disposed in the middle of the housing 2 in a state in which an opening of the water tub 5 is directed upward. The water tub 5 is suspended in the housing 2 by a plurality of suspension bars 10 so as to be freely whirled in the housing 2.

Specifically, a plurality of brackets 11 is provided around the inner upper side of the housing such that the upper ends of the suspension bars 10 are connected to the brackets 11. Connection parts 5a corresponding to the brackets 11 are provided at the lower part of the water tub 5 such that the lower ends of the suspension bars 10 are connected to the connection parts 5a.

The washing tub 6 is a cylindrical container having a smaller bottom than the water tub 5. The washing tub 6 is disposed in the water tub 5 in a coaxial fashion. At the outside of the washing tub 6 is formed a plurality of through holes 6b, through which water is drained. Upon driving of the drive unit 7, the washing tub 6 is rotated about a vertical axis J extending almost in a vertical direction.

The drive unit 7 is mounted under the water tub 5. The drive unit 7 includes a drive motor 12 and a power transmission device 13. The power transmission device 13 has a first rotary shaft 13a and a second rotary shaft 13b located at the center of the water tub 5. The first rotary shaft 13a is mounted at the washing tub 6 through a bottom wall of the water tub 5. The second rotary shaft 13b protrudes into the washing tub 6 through bottom walls of the water tub 5 and the washing tub 6 such that the second rotary shaft 13b is mounted at the pulsator 8.

Upon driving of the drive motor 12, the power transmission device 13 selectively rotates the first rotary shaft 13a and the second rotary shaft 13b in alternating directions in response to the respective processes. For example, in the washing or rinsing process, the second rotary shaft 13b is driven to rotate the pulsator 8 in alternating directions in a predetermined cycle. In the spin-drying process, on the other hand, the first rotary shaft 13a is driven to rotate the washing tub 6 at high speed. Although not shown, the water tub 5 is provided with a drainage port, which is controlled to be opened or closed in response to the respective processes. In addition, a water supply unit to supply water to the water tub 5 in response to the respective processes is provided in the housing 2.

In the washing or rinsing process, therefore, water is supplied to the washing tub 6 in a state in which the drainage port is closed with the result that the water is stored in the water tub 5 and the washing tub 6. In the spin-drying process, on the other hand, the drainage port is open with the result that water separated from laundry is drained from the water tub 5 and the washing tub 6 through the drainage port.

In each process, particularly in the spin-drying process, the washing tub 6 is vibrated. When laundry accumulates at one side, the vibration is further increased. The ball balancer 30 is mounted at the upper part of the washing tub 6 to suppress the vibration.

The ball balancer 30 is formed in an annular shape. The ball balancer 30 is mounted at the edge of the opening of the washing machine 1 such that the center of the ball balancer 30 is aligned with the center of the washing tub 6, i.e. the vertical shaft J, which is the rotary shaft, of the washing tub 6.

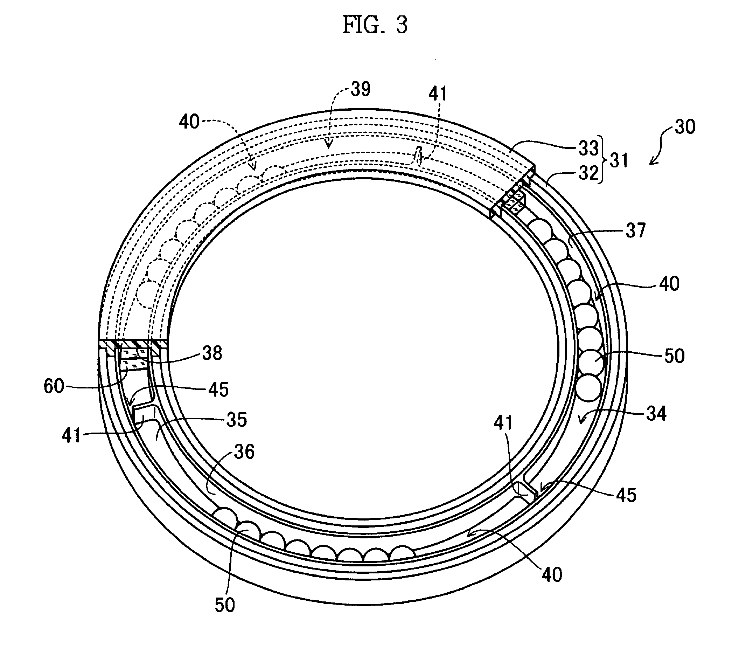

FIG. 3 shows the ball balancer 30. The ball balancer 30 includes a balancer case 31, balls 50, and a viscous fluid 60.

The balancer case 31 includes an annular case body 32 and an annular lid member 33 joined to the case body 32. The case body 32 has an annular depression 34. The depression 34 is partitioned into an annular bottom surface 35, a cylindrical inner circumferential surface 36 extending upward from the inside edge of the bottom surface 35 in the radial diction, and a cylindrical outer circumferential surface 37 extending upward from the outside edge of the bottom surface 35 in the radial diction such that the cylindrical outer circumferential surface 37 is opposite to the cylindrical inner circumferential surface 36. The depression 34 has an almost rectangular cross section opened at the top thereof.

The lid member 33 is joined to the top of the case body 32. As a result, a top surface 38 of the depression 34 is covered by the lid member 33 and an annular sealed ring space 39 is defined in the balancer case 31. The bottom surface 35 and the top surface 38 partitioning the ring space 39 are almost parallel to each other, and the inner circumferential surface 36 and the outer circumferential surface 37 partitioning the ring space 39 are almost parallel to each other. The bottom surface 35 and the inner circumferential surface 36 are almost perpendicular to each other.

The ring space 39 is partitioned into a plurality of arc-shaped divided spaces by a plurality of division plates 41. In this embodiment, three divided spaces 40 having the same structure are uniformly defined in the ring space 39 by three division plates 41 arranged at equal intervals in the circumferential direction.

In the ball balancer 30, a plurality of balls 50 (24 balls in this embodiment) is used. Each ball 50 may be a steel ball, although other materials such as aluminum may also be used. The balls 50 have the same weight and dimensions. Eight balls 50 are received in each divided space 40.

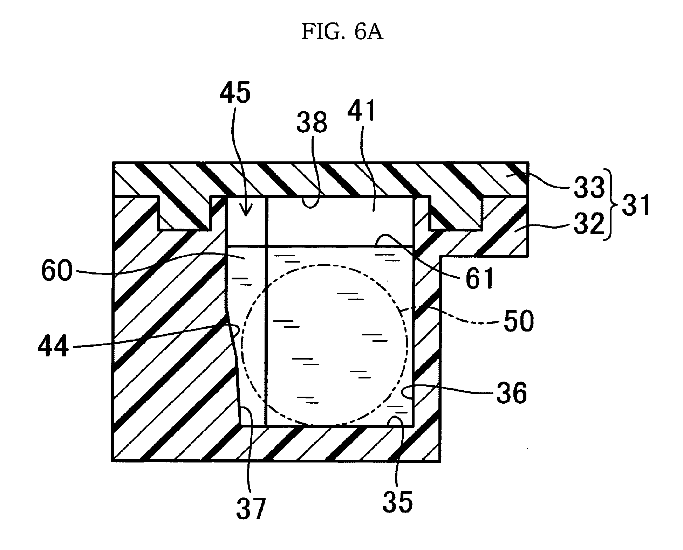

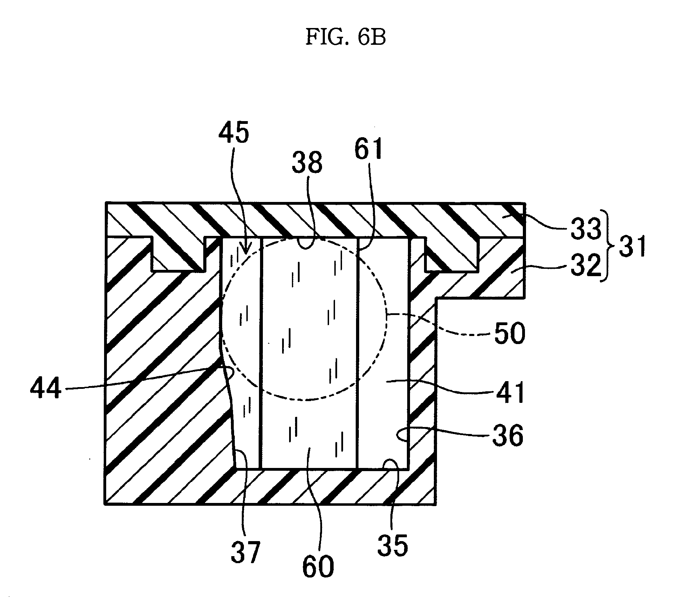

The viscous fluid 60 has high viscosity. The viscous fluid 60 is contained in the ring space 39 together with the balls 50. The movement of the balls 50 is suppressed by the viscous fluid 60. The viscous fluid 60 is partially contained in the ring space 39 (see FIG. 6).

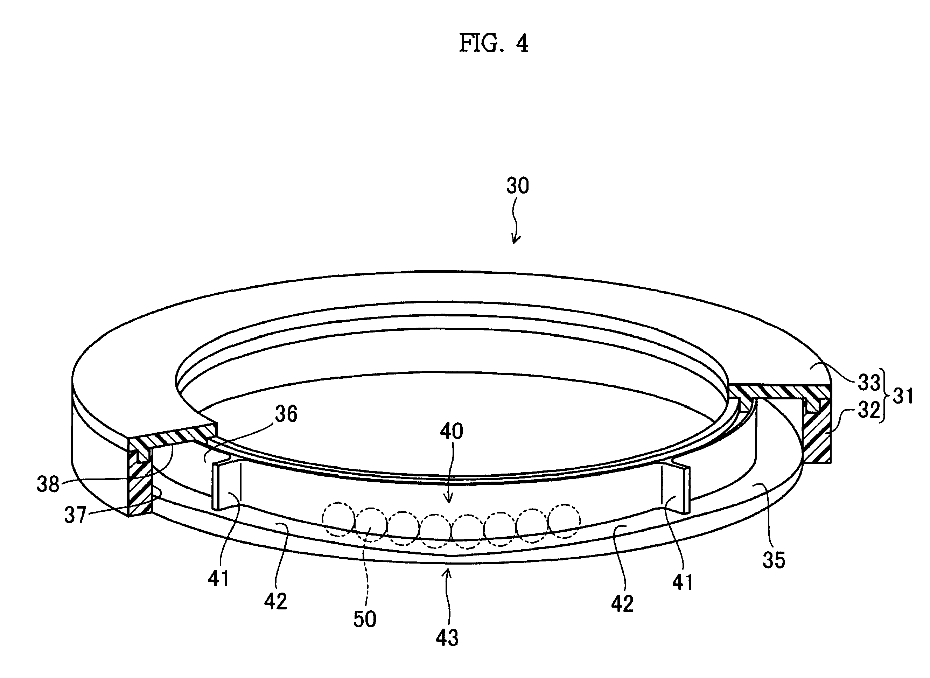

As shown in FIG. 4, inclined surfaces 42 (also referred to as bottom tapers 42) are formed at the bottom surface 35 of each divided space 40.

Specifically, a deepest part 43, at which the bottom surface 35 is lowest, is located at a middle region of each divided space 40 in the circumferential direction, and the bottom tapers 42, which are inclined downward toward the deepest part 43 at a predetermined inclination angle in the circumferential direction, are formed at opposite sides of the deepest part 43. The respective bottom tapers 42 extend to opposite ends of each divided space 40 in the circumferential direction, i.e. the lower edges of the division plates 41 partitioning the opposite ends of each divided space 40.

In a state in which the ball balancer 30 is stopped or rotated at low speed, the balls 50 are in contact with the bottom tapers 42. Even in a case in which the balls 50 are dispersed, therefore, the balls 50 are guided by the bottom tapers 42 and thus gather in the deepest parts 43 a predetermined time after a spin-drying process is completed. The deepest parts 43 are disposed at positions where total weight of the balls is balanced.

That is, in a case in which the balls 50 received in each divided space 40 gather in the deepest part 43, the ball balancer 30 is almost horizontally placed. In the ball balancer 30, three divided spaces 40 having the same structure are uniformly disposed in the circumferential direction, and therefore, the deepest part 43 is positioned at the middle region of each divided space 40 in the circumferential direction.

When the ball balancer 30 is stopped a predetermined time before a spin-drying process is performed, therefore, the balls 50 gather in the deepest parts 43, whereby total weight of the balls is balanced. Consequently, it may be possible to stably suppress nonuniform whirling of the water tub 5, which may occur when the rotational frequency of the washing tub 6 exceeds a resonance rotational frequency.

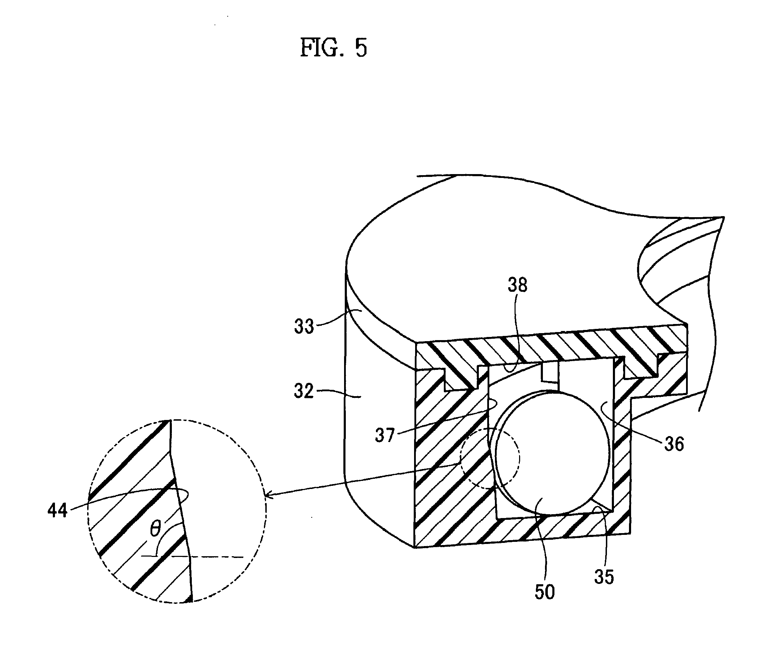

As shown in FIG. 5, an inclined surface 44 (also referred to as a side taper 44) is formed at the outer circumferential surface 37.

Specifically, the side taper 44 extends along a middle region of the outer circumferential surface 37 in the vertical direction. The side taper 44 is upwardly inclined outward in the radial direction such that the diameter of the outer circumferential surface 37 is gradually increased from the lower side to the upper side.

The side taper 44 is formed within a range in which the balls 50 gathering in the deepest parts 43 in contact with the bottom surface 35 at least contact the side taper 44. During high-speed rotation, the balls 50 are guided toward the top surface 38 such that the balls 50 are separated from the bottom surface 35 and moved upward along the outer circumferential surface 37.

Specifically, the side taper 44 is formed such that the balls 50 are separated from the bottom surface 35 by centrifugal force after the rotational frequency of the washing tub 6 exceeds a predetermined rotational frequency causing first resonance (also referred to as a resonance rotational frequency).

As shown in FIG. 6A, in a low rotational frequency region, in which the washing tub 6 is rotated from a stop state until the rotational frequency of the washing tub 6 reaches the resonance rotational frequency, the balls remain in contact with the bottom surface 35. Consequently, the balls 50 gather in the deepest parts 43 by the bottom tapers 42.

As a result, in a low rotational frequency region before a spin-drying process is performed or immediately after the spin-drying process is performed, total weight of the balls 50 is balanced, and therefore, it may be possible to suppress nonuniform whirling of the water tub 5, which may occur when the rotational frequency of the washing tub 6 exceeds the resonance rotational frequency.

In a high rotational frequency region in which the rotational frequency of the washing tub 6 exceeds the resonance rotational frequency, the balls 50 are separated from the bottom surface 35 and moved upward along the outer circumferential surface 37 by centrifugal force and the side taper 44. The balls 50 are moved upward to a position where the balls are not affected by the bottom tapers 42 as shown in FIG. 6B. Consequently, a balance adjustment function of the ball balancer 30 is effectively exhibited.

The side taper 44 may have an inclination angle θ (angle between an extension line of the ball balancer 30 in the radial direction and the side taper 44) of 40 to 88 degrees. If the inclination angle θ is 40 degrees or more, the balls 50 may be stably separated from the bottom surface 35 immediately after the rotational frequency of the washing tub exceeds the resonance rotational frequency. On the other hand, if the inclination angle θ is greater than 88 degrees, it may be difficult for the balls 50 to be separated from the bottom surface 35 even when the rotational frequency of the washing tub exceeds the resonance rotational frequency with the result that the balance adjustment function of the ball balancer 30 may not be effectively exhibited.

A gap 45 (also referred to as a communication gap 45) is defined between each division plate 41 and the outer circumferential surface 37.

The division plates 41 are formed at the case body 32 so as to protrude outward from the inner circumferential surface 36 of the depression 34 in the radial direction within the depression 34. The division plates 41 extend to the bottom surface 35. Consequently, no gap is defined between the division plates 41 and the bottom surface 35. In addition, the upper end edge of each division plate 41 is formed so as to be in tight contact with or almost in tight contact with the inside of the lid member 33. Consequently, no gap is defined between the division plates 41 and the top surface 38.

Meanwhile, a communication gap 45 formed in an elongated shape in the vertical direction is defined between a protruding end of each division plate 41 and the outer circumferential surface 37. The communication gap 45 has a smaller size than each ball 50. The communication gap 45 is opened with respect to at least the bottom surface 35.

Consequently, the viscous fluid 60 may freely move between the respective divided spaces 40 through the communication gaps 45; however, the balls 50 may move only in the corresponding divided spaces 40 by the division plates 41.
Since a movable range of the balls 50 is limited to a portion of the ball balancer 30, i.e. the movable range of the balls 50 is small, the balls 50 may rapidly gather in the deepest parts 43.

Also, it may be necessary for the viscous fluid 60 to be uniformly contained in the respective divided spaces 40 such that total weight of the viscous fluid 60 is uniform in the same manner as the balls 50. If the communication gap 45 is not provided at each division plate 41, it may be necessary for the same amount of viscous fluid 60 to be contained in the respective divided spaces 40 at high accuracy, which takes much time and effort in manufacturing the ball balancer 30. In the ball balancer 30 according to this embodiment, on the other hand, the communication gap 45 is provided at each division plate 41. When a predetermined amount of viscous fluid 60 is contained in the ring space 39, therefore, the viscous fluid 60 may be uniformly contained in the respective divided spaces 40, thereby improving productivity.

Also, the divided spaces 40 function to suppress rhythmic movement of the viscous fluid 60.

In a state in which the ball balancer 30 is stopped or rotated at low speed, a liquid surface 61 of the viscous fluid 60 is almost horizontal as shown in FIG. 6A.

In a high rotational frequency region in which the ball balancer 30 is rotated at high speed, the viscous fluid 60 is moved outward in the radial direction by centrifugal force as shown in FIG. 6B. As a result, the liquid surface 61 of the viscous fluid 60 is positioned adjacent to the inner circumferential surface 36 in a state in which the liquid surface 61 of the viscous fluid 60 is almost vertical.

If the division plates 41 are not provided and the viscous fluid 60 freely moves in the circumferential direction, the viscous fluid 60 may move (rhythmically move) in the ring space 39 according to the rotation and vibration of the ball balancer 30. When the viscous fluid 60 rhythmically moves, vibration or noise of the washing tub 6 is further increased.

In the ball balancer 30 according to this embodiment, on the other hand, the interior of the ring space 39 is partitioned by the division plates 41. Consequently, the movement of the viscous fluid 60 is reduced, thereby suppressing rhythmic movement of the viscous fluid 60.

The communication gaps 45 may be formed within a range in which the liquid surface 61 of the viscous fluid 60 is blocked by the division plates 41 even when the liquid surface 61 of the viscous fluid 60 is adjacent to the outer circumferential surface 37 due to rhythmic movement of the viscous fluid 60.

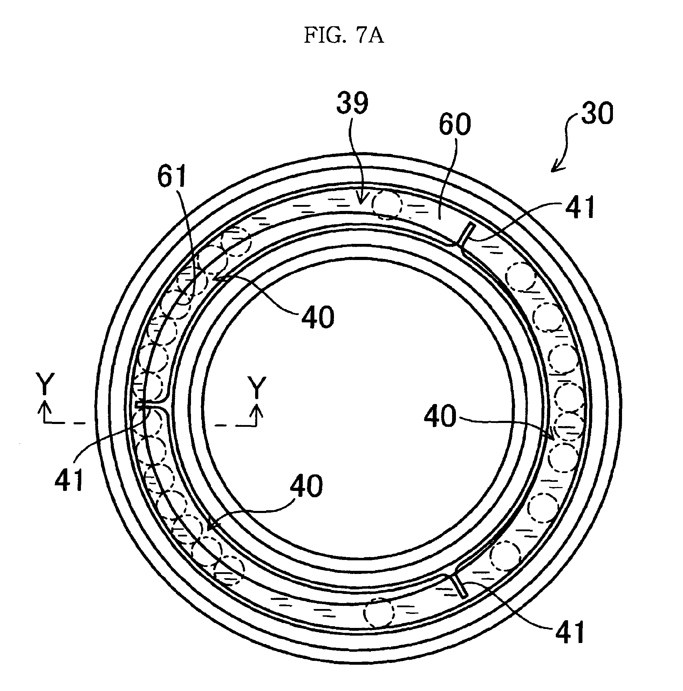

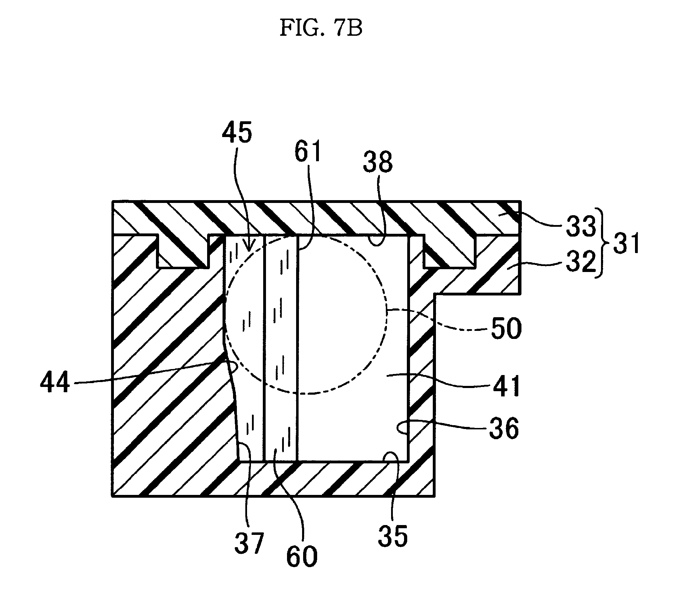

Specifically, in a case in which the liquid surface 61 of the viscous fluid 60 is almost vertical when viewed in the direction of the vertical axis J, a circular trajectory of the liquid surface 61 is calculated from the capacity of the viscous fluid 60 contained in the ring space 39. The trajectory of the liquid surface 61 is made eccentric until the liquid surface 61 contacts the inner circumferential surface 36 as indicated by a virtual line of FIG. 7A. As a result, as shown in FIG. 7B, each communication gap 45 may be formed even at a region where the distance from the outer circumferential surface 37 to the liquid surface 61 is smallest within a range in which the liquid surface 61 of the viscous fluid 60 is blocked by the division plates 41

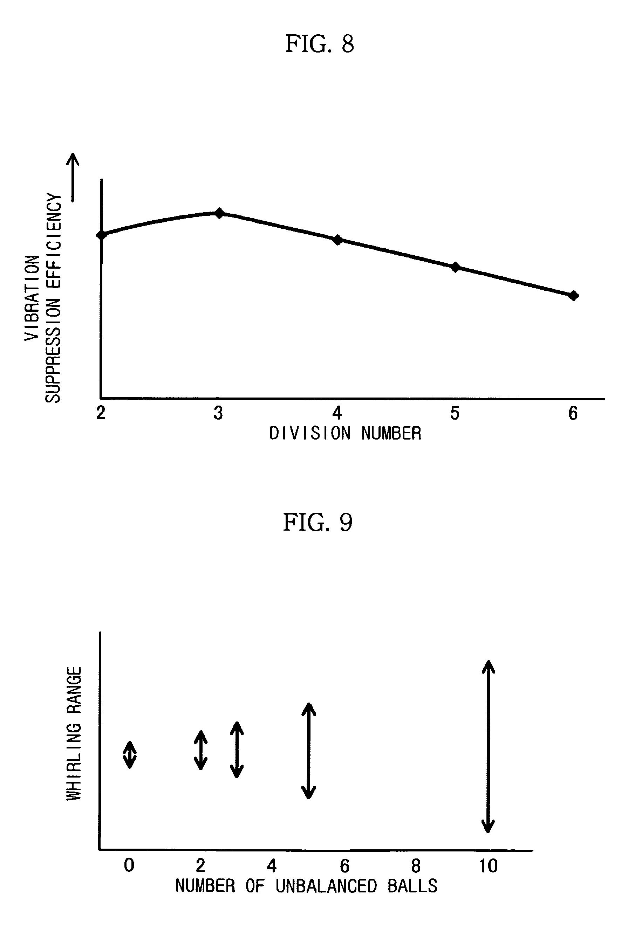

FIG. 8 is a graph showing a relationship between the division number of the ring space 39 and vibration suppression efficiency of the washing tub 6. In a case in which the division number of the ring space 39 is 2 to 4, the vibration suppression efficiency of the washing tub 6 is high. Particularly when the division number of the ring space 39 is 3, the vibration suppression efficiency of the washing tub 6 is highest.

If the division number of the ring space 39 is increased, a movable range of the balls 50 is decreased, and therefore, it may be difficult to achieve biased weight balance. As a result, it may be difficult to achieve weight balance between the balls 50 and laundry, whereby the vibration suppression efficiency of the washing tub 6 is lowered.

FIG. 9 is a graph showing a relationship between the number of balls 50 deviating from positions where weight balance is achieved (unbalanced balls) and a whirling range of the water tub 5 in the housing 2 (a whirling width of the water tub 5 when viewed in the direction of the vertical axis J) in a low rotational frequency region in which the rotational frequency of the washing tub 6 is lower than a resonance rotational frequency.

As the number of unbalanced balls is increased, the whirling range of the water tub 5 is also increased. In the ball balancer 30 according to this embodiment, the number of unbalanced balls may be reduced, thereby effectively suppressing the whirling range of the water tub 5.

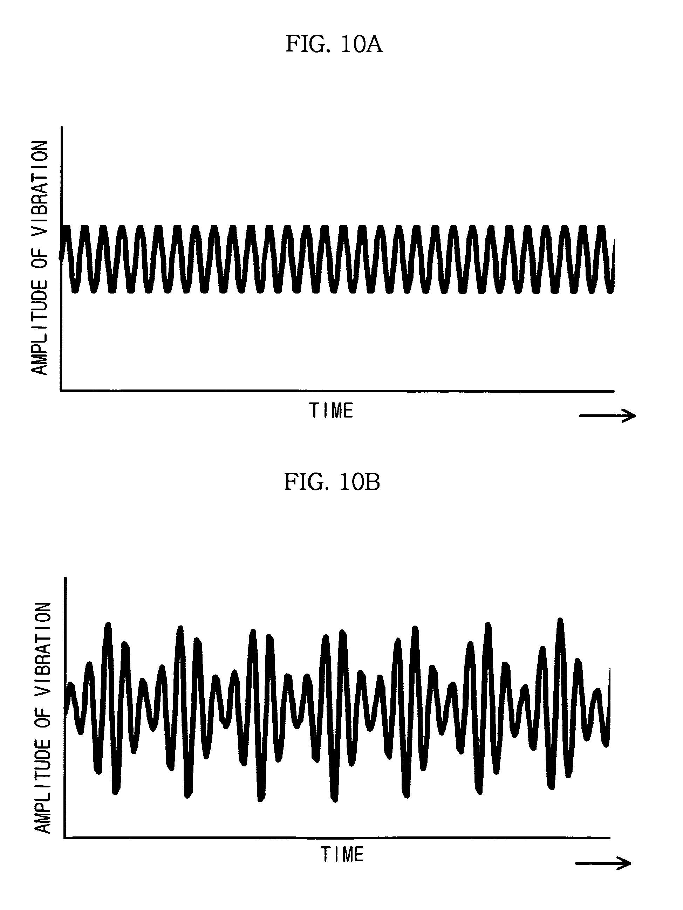

FIG. 10 shows rhythmic movement of the viscous fluid 60 depending upon whether or not the division plates 41 are provided. FIG. 10A is a graph showing time-based change of a vibration waveform of the washing tub 6 in a case in which the division plates 41 are provided as in this embodiment and FIG. 10B is a graph showing time-based change of a vibration waveform of the washing tub 6 in a case in which the division plates 41 are not provided. Other conditions, such as states of laundry and the number of balls 50, excluding the presence or absence of the division plates 41 are the same.

In FIG. 10A, weight balance between the ball balancer 30 and the laundry is adjusted and rhythmic movement of the viscous fluid 60 is suppressed by the division plates 41. As a result, the washing tub 6 has uniform amplitude of vibration, and therefore, the washing tub 6 is stably vibrated. In FIG. 10B, on the other hand, the viscous fluid 60 rhythmically moves, and the rhythmic movement of the viscous fluid 60 overlaps with vibration of the washing tub 6. As a result, great amplitude of vibration is periodically generated from the washing tub 6, and therefore, the washing tub 6 is unstably vibrated.

Consequently, the rhythmic movement of the viscous fluid 60 is suppressed by the provision of the division plates 41, thereby more effectively suppressing vibration of the washing tub 6.

Meanwhile, embodiments of the present disclosure are not limited to the washing machine with the above-stated construction. The washing machine may have various constructions as follows.

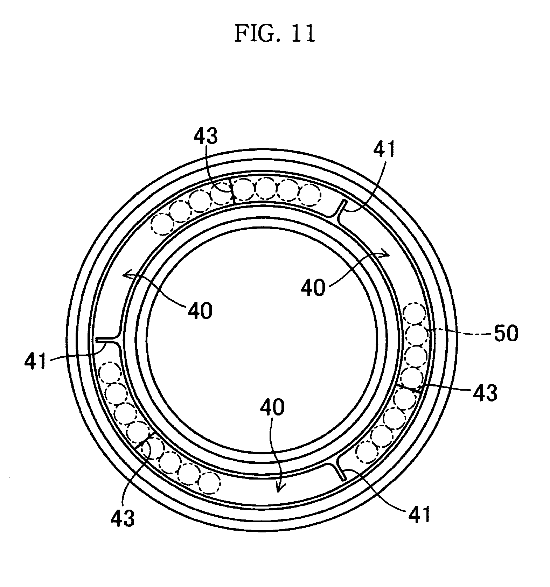

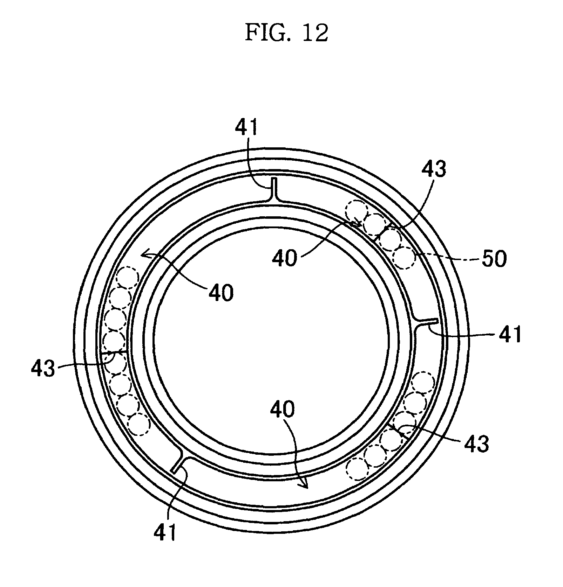

For example, as shown in FIG. 11, the deepest part 43 is not limited to the middle region of each divided space 40 in the circumferential direction. The deepest part 43 may be located at one side of each divided space 40 in the circumferential direction. That is, the deepest parts 43 may be disposed to balance total weight of the balls 50. As shown in FIG. 12, the division plates 41 may be nonuniformly arranged in the circumferential direction of the ring space 39 such that the divided spaces 40 have different sizes. In addition, different number of balls 50 may be received in the respective divided spaces 40. The deepest parts 43 may be nonuniformly disposed in the circumferential direction. That is, total weight of the balls 50 may be balanced when the balls 50 gather in the respective deepest parts 43.

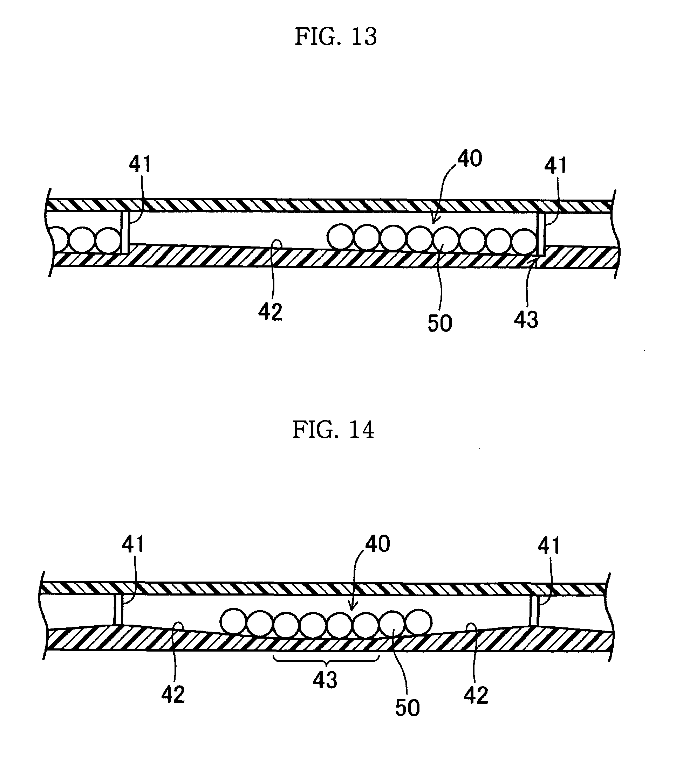

As shown in FIG. 13, the bottom taper 42 may be provided between opposite ends of each divided space 40 in the circumferential direction such that the bottom taper 42 is uniformly inclined. In this case, the deepest part 43 is located at one side of each division plate 41, and therefore, the balls 50 gather adjacent to each division plate 41.

As previously described, the deepest part 43 may be located at the middle region of each divided space 40 in the circumferential direction. In this case, the circumferential length of the bottom taper 42 is decreased. Consequently, it may be possible to increase the inclination of the bottom taper 42 without increasing the thickness of the bottom of the case body 32, whereby the balls 50 stably gather in the deepest part 43.

As shown in FIG. 14, the portion of the deepest part 43 corresponding to the bottom surface 35 may have a uniform width in the circumferential direction. As a result, the inclination of each bottom taper 42 is further increased, and therefore, balls stably gather in the deepest part 43. In this case, at least balls located at the outermost sides in the circumferential direction may be in contact with the bottom tapers 42. As a result, there are no gaps between the respective balls 50 gathering in the deepest part 43, thereby achieving stable weight balance in the same manner as in the above embodiment.

The size and number of the balls 50 may be properly selected as needed. The balls 50 may have different sizes or weights.

As is apparent from the above description, the washing machine according to the embodiments of the present invention has an effect in that the washing machine has a simple structure, the balls are stably uniformly arranged in the ball balancer when a spin-drying process is commenced, and rhythmic movement of the viscous fluid is suppressed.

Although a few embodiments of the present invention have been shown and described, it would be appreciated by those skilled in the art that changes may be made in these embodiments without departing from the principles of the invention, the scope of which is defined in the claims.

## Claims

1. A balancer (30) to contain a plurality of balls and a viscous fluid (60), the balancer comprising:
a case (31) having a ring space (39) defined therein, the ring space being defined by a bottom surface (35), top surface (38), inner circumferential surface (36), and outer circumferential surface (37);
**characterised in that** the ball balancer further comprises:
a plurality of division plates (41) to partition the ring space into a plurality of arc-shaped divided spaces (40),
wherein the viscous fluid (60) and the plurality of balls (50) are receivable in each divided space (40), and
the bottom surface (35) of each divided space (40) is inclined downwardly from one end of each division plate (41) to a deepest part (43) in a circumferential direction.

2. The balancer according to claim 1, wherein a gap (45) is defined between each division plate and the outer circumferential surface.

3. The balancer according to claim 1, wherein the outer circumferential surface includes a radially outwardly inclined portion.

4. The balancer according to claim 1, wherein the number of the divided spaces is 3.

5. The balancer according to claim 1, wherein the deepest part is located at a middle portion of each divided space in the circumferential direction.

6. A washing machine (1) comprising:
a housing (2);
a water tub (5) suspended in the housing;
a washing tub (6) disposed in the water tub to rotate about a vertical axis; and
a ball balancer (30) according to claim 1 mounted to the washing tub.

7. The washing machine according to claim 6, wherein a gap (45) smaller than each ball is defined between each division plate and the outer circumferential surface.

8. The washing machine according to claim 6 or 7, wherein the outer circumferential surface (37) is provided with an inclined surface (44) to guide the balls to the top surface such that the balls are separated from the bottom surface.

9. The washing machine according to claim 6, 7 or 8, wherein the number of the divided spaces is 3.

10. The washing machine according to any one of the preceding claims, wherein the deepest part is located at a middle portion of each divided space in the circumferential direction.

## Patentansprüche

1. Ausgleicher (30), der eine Vielzahl von Kugeln und eine viskose Flüssigkeit (60) enthält, wobei der Ausgleicher Folgendes beinhaltet:
eine Hülle (31), die einen darin definierten Ringraum (39) aufweist, wobei der Ringraum durch eine untere Oberfläche (35), obere Oberfläche (38), innere umlaufende Oberfläche (36) und äußere umlaufende Oberfläche (37) definiert ist;
**dadurch gekennzeichnet, dass** der Kugelausgleicher ferner Folgendes beinhaltet:
eine Vielzahl von Trennplatten (41), um den Ringraum in eine Vielzahl von bogenförmigen, getrennten Räumen (40) zu unterteilen,
worin die viskose Flüssigkeit (60) und die Vielzahl von Kugeln (50) in jedem getrennten Raum (40) aufgenommen werden können, und
die untere Oberfläche (35) von jedem getrennten Raum (40) von einem Ende von jeder Trennplatte (41) zu einem tiefsten Teil (43) in einer umlaufenden Richtung nach unten geneigt ist.

2. Ausgleicher gemäß Anspruch 1, wobei zwischen jeder Trennplatte und der äußeren umlaufenden Oberfläche ein Spalt (45) definiert ist.

3. Ausgleicher gemäß Anspruch 1, wobei die äußere umlaufende Oberfläche einen radial nach außen geneigten Abschnitt umfasst.

4. Ausgleicher gemäß Anspruch 1, wobei die Anzahl der getrennten Räume 3 ist.

5. Ausgleicher gemäß Anspruch 1, wobei sich der tiefste Teil an einem Mittelabschnitt von jedem getrennten Raum in der umlaufenden Richtung befindet.

6. Waschmaschine (1), die Folgendes beinhaltet:
ein Gehäuse (2);
einen Wasserbehälter (5), der im Gehäuse aufgehängt ist;
einen Waschbehälter (6), der im Wasserbehälter angeordnet ist, um um eine vertikale Achse zu rotieren; und
einen Kugelausgleicher (30) gemäß Anspruch 1, der am Waschbehälter montiert ist.

7. Waschmaschine gemäß Anspruch 6, wobei zwischen jeder Trennplatte und der äußeren umlaufenden Oberfläche ein Spalt (45) definiert ist, der kleiner als jede Kugel ist.

8. Waschmaschine gemäß Anspruch 6 oder 7, wobei die äußere umlaufende Oberfläche (37) mit einer geneigten Oberfläche (44) versehen ist, um die Kugeln zur oberen Oberfläche zu führen, so dass die Kugeln von der unteren Oberfläche separiert sind.

9. Waschmaschine gemäß Ansprüchen 6, 7 oder 8, wobei die Anzahl der getrennten Räume 3 ist.

10. Waschmaschine gemäß einem der vorhergehenden Ansprüche, wobei sich der tiefste Teil an einem Mittelabschnitt von jedem getrennten Raum in der umlaufenden Richtung befindet.

## Revendications

1. Dispositif d'équilibrage (30) destiné à contenir une pluralité de billes et un fluide visqueux (60), le dispositif d'équilibrage comprenant :
un carter (31) dans lequel est défini un espace annulaire (39), ledit espace annulaire étant défini par une surface inférieure (35), une surface supérieure (38), une surface circonférentielle interne (36) et une surface circonférentielle externe (37) ;
**caractérisé en ce que** le dispositif d'équilibrage à billes comprend en outre :
une pluralité de plaques séparatrices (41) servant à partager l'espace annulaire en une pluralité de partitions de forme arquée (40),
dans lequel le fluide visqueux (60) et la pluralité de billes (50) peuvent être reçus dans chaque partition (40), et
la surface de fond (35) de chaque partition (40) est inclinée vers le bas depuis une extrémité de chaque plaque séparatrice (41) vers une partie la plus basse (43) dans une direction circonférentielle.

2. Dispositif d'équilibrage selon la revendication 1, dans lequel un interstice (45) est défini entre chaque plaque séparatrice et la surface circonférentielle externe.

3. Dispositif d'équilibrage selon la revendication 1, dans lequel la surface circonférentielle externe comporte une portion inclinée vers l'extérieur dans le sens radial.

4. Dispositif d'équilibrage selon la revendication 1, dans lequel les partitions sont au nombre de 3.

5. Dispositif d'équilibrage selon la revendication 1, dans lequel la partie la plus basse est située au niveau d'une portion centrale de chaque partition dans la direction circonférentielle.

6. Machine à laver (1) comprenant :
un châssis (2) ;
une cuve à eau (5) suspendue dans le châssis ;
une cuve de lavage (6) disposée dans la cuve à eau de façon à tourner sur un axe vertical ; et
un dispositif d'équilibrage à billes (30) selon la revendication 1, monté sur la cuve de lavage.

7. Machine à laver selon la revendication 6, dans laquelle un interstice (45) plus petit que chaque bille est défini entre chaque plaque séparatrice et la surface circonférentielle externe.

8. Machine à laver selon les revendications 6 ou 7, dans laquelle la surface circonférentielle externe (37) est dotée d'une surface inclinée (44) servant à guider les billes vers la surface supérieure de façon à séparer les billes de la surface inférieure.

9. Machine à laver selon les revendications 6, 7 ou 8, dans laquelle les partitions sont au nombre de 3.

10. Machine à laver selon l'une quelconque des revendications précédentes, dans laquelle la partie la plus basse est située au niveau d'une portion centrale de chaque partition dans la direction circonférentielle.
